## Europäisches Patentamt

## European Patent Office

## Office européen des brevets

(19)

(11) **EP 0 571 884 B1**

(12) **EUROPÄISCHE PATENTSCHRIFT**

(45) Veröffentlichungstag und Bekanntmachung des Hinweises auf die Patenterteilung:
**02.04.1997 Patentblatt 1997/14**

(51) Int Cl.$^6$: **C08J 5/04**
// C08L71/00

(21) Anmeldenummer: **93108109.5**

(22) Anmeldetag: **18.05.1993**

(54) **Verbundwerkstoffe enthaltend Fäden aus Polyetherketonen**

Composite materials containing polyether ketone filaments

Matériaux composites contenant des filaments en polyéthercétones

(84) Benannte Vertragsstaaten:
**DE FR GB IT NL**

(30) Priorität: **27.05.1992 DE 4217475**

(43) Veröffentlichungstag der Anmeldung:
**01.12.1993 Patentblatt 1993/48**

(73) Patentinhaber: **HOECHST AKTIENGESELLSCHAFT
65926 Frankfurt am Main (DE)**

(72) Erfinder: **Rötgers, André
W-8903 Bobingen (DE)**

(56) Entgegenhaltungen:
**EP-A- 0 279 677          EP-A- 0 488 071**

- **CHEMIEFASERN/TEXTILINDUSTRIE Bd. 38, Nr. 90, März 1988, FRANKFURT, GERMANY Seiten T11 - T12 'FASERN AUS POLYETHERKETON'**
- **DATABASE WPIL Derwent Publications Ltd., London, GB; AN 92-109287(14)**
- **DATABASE WPIL Derwent Publications Ltd., London, GB; AN 90-011721(02)**

## Beschreibung

Die vorliegende Erfindung betrifft Verbundwerkstoffe, die Fäden oder davon abgeleitete Gebilde, wie Zwirne oder textile Flächengebilde aus Polyetherketonen (im folgenden PEK genannt) enthalten.

Wie aus vielen Untersuchungen der letzten Jahre bekannt ist, besteht eine große Schwierigkeit bei der Einbettung von PEK-Garnen oder -Zwirnen darin, daß zwischen der PEK-Oberfläche und dem aufgetragenen Matrixmaterial eine gegenüber anderen Verstärkungsmaterialien, wie z.B. Polyamiden oder Polyestern nur sehr geringe Bindung zu erreichen ist. Dies ändert sich auch nicht oder kaum bei zusätzlicher Vorimprägnierung des PEK-Fadens mit den üblicherweise zur Verfügung stehenden Haftvermittlern auf Basis von Isocyanat-, Epoxid- oder Resorcinharz. Auch derart vorpräparierte Fäden ergeben eine, verglichen mit Polyamiden oder Polyestern, unzureichende Haftung. In der Praxis behilft man sich bislang mit Verstärkungskonstruktionen, die durch ihre offene Struktur einen Durchgriff des Matrixmaterials gestatten und dadurch eine mechanische Verankerung bewirken.

Ursache der geringen Haftung ist der chemisch sehr neutrale Charakter von PEK, der eine chemische Bindung praktisch nicht zuläßt.

Es sind bereits Verstärkungsgarne bekannt geworden, die durch eine Blasdüse texturiert wurden und anschließend in ein Matrixmaterial eingebettet wurden. Dabei handelt es sich um Polyamidgarne, wie aus der US-A-3,314,897 bekannt, oder um Garne aus Polyethylenterephthalat, wie aus der EP-A-319,940 bekannt. Alle diese Materialien lassen sich, im Gegensatz zu PEK, auch mit anderen Methoden, wie Verwendung von Haftvermittlern, mit der Matrix verbinden.

Aufgabe der vorliegenden Erfindung ist es daher, einen Verbundwerkstoff zur Verfügung zu stellen, der PEK-Fasern als Verstärkungsmaterialien enthält und der sich durch eine ausgezeichnete Haftung zwischen Matrixmaterial und Verstärkungsmaterial auszeichnet.

Die Erfindung betrifft einen Verbundwerkstoff enthaltend als Matrix eine polymere organische Verbindung und als Verstärkungsmaterial Fäden oder Zwirne aus Polyetherketon oder aus diesen Fäden oder Zwirnen aufgebaute textile Flächengebilde, dadurch gekennzeichnet, daß Fäden oder Zwirne aus Polyetherketon die eine Kräuselung aufweisen enthalten sind.

Unter Polyetherketonen (PEK) werden im Rahmen dieser Erfindung alle Polymere verstanden, die Struktureinheiten -Ar-O- und -Ar-CO- aufweisen, worin Ar für einen aromatischen Rest steht. Dabei kann es sich z.B. um einen ein- oder mehrkernigen aromatischen Kohlenwasserstoffrest handeln, insbesondere um einen Phenylenrest. Diese Struktureinheiten können auf verschiedene Art miteinander verknüpft sein, insbesondere in p-Stellung. Gemäß dem allgemeinen Sprachgebrauch bezeichnet man die erste Einheit als "E" (Ether) und die zweite Einheit als "K" (Keton). je nach Abfolge der Ether- und Ketoneinheiten unterscheidet man z.B. zwischen PEK-, PEEK-, PEKK- oder PEEKK-Typen. Alle diese Polymertypen sind vom Begriff Polyetherketone im Sinne dieser Erfindung umfaßt. Besonders bevorzugt verwendet man die PEEK-Typen.

Als Matrixmaterial kommen alle für Verbundwerkstoffe geeigneten polymeren organischen Materialien in Betracht. Dabei kann es sich um härtbare und/oder um thermoplastische Kunststoffe handeln, wie z.B. um Epoxidharze, härtbare Polyesterharze, Melamin-Formaldehydherze, Resole oder Novolake oder um thermoplastische Polyester oder um thermoplastische Aramide.

Besonders bevorzugt handelt es sich bei den Matrixmaterialien um Elastomere, wie Kautschuk oder Gummi.

Das Verstärkungsmaterial kann in Form von Fäden, Zwirnen oder daraus aufgebauten textilen Flächengebilden, wie Gestricken, Gewirken oder insbesondere Geweben, vorliegen.

Wesentlich ist, daß der PEK-Faden gekräuselt ist oder daß die daraus abgeleiteten Strukturen, wie Zwirne oder Gewebe solche gekräuselten Fäden enthalten. Bei abgeleiteten Strukturen reicht es aus, wenn lediglich ein Teil der diese Strukturen aufbauenden Fäden gekräuselt ist.

Im allgemeinen sind die PEK-Fäden aus Endlosfilamenten aufgebaut. Es lassen sich aber auch Garne aus gekräuselten Stapelfasern verwenden.

Die Form der Kräuselung kann beliebig sein. So kann es sich z.B. um zahnradgekräuselte oder um stauchkammergekräuselte Fäden handeln. Vorzugsweise verwendet man blastexturierte Fäden, insbesondere solche Fäden, die Schlaufen aus Filamentkapillaren aufweisen.

Die Schlaufenzahl beträgt bei diesen bevorzugten Fäden insbesondere 3 bis 6 pro cm Fadenlänge.

Besonders bevorzugt verwendet man Zwirne oder Gewebe aus glatten und gekräuselten PEK-Fäden. Dabei wählt man den Anteil der gekräuselten Fäden im allgemeinen so, daß die Struktur praktisch keinen Festigkeitsverlust gegenüber der nur aus glatten Fäden aufgebauten Struktur aufweist. Im allgemeinen genügt ein Anteil von weniger als 50 Gew.-% an gekräuselten Fäden, bezogen auf das Gewicht der Struktur.

Die erfindungsgemäßen Verbundwerkstoffe auf der Basis von Elastomeren lassen sich insbesondere als hitze- und chemikalienbeständige Formkörper einsetzen.

Das nachfolgende Beispiel erläutert die Erfindung.

Beispiel 1

Bei einem Versuch wurde ein Fadenanteil der zu einem PEK-Zwirn der Konstruktion (dtex 410 x 4) x 2 benötigten Filamente durch einen blastexturierten dtex 410-Faden ersetzt. Die Konstruktion sah danach folgendermaßen aus:

$$\left.\begin{array}{l} \text{dtex 410 text. x 1} \\[2ex] \text{dtex 410 glatt x 3} \end{array}\right) \quad \text{x 2 Z/S 300/215}$$

Dieser Zwirn wurde in Gummimischung ohne zusätzlichen Haftvermittler einvulkanisiert. Verglichen wurde das Haftergebnis mit Zwirnen

a) aus 100 % glattem Material und
b) aus glattem Material, welches mit RFL (Resorcin-Formaldehyd Latex) vorimprägniert wurde.

Die Haftung des Zwirnes wurde in N gemäß T-Test durch Herauszsiehen aus einem Gummikörper definierter Größe ermittelt.

Die Haftwerte des Zwirns mit texturiertem Anteil (25 %) fielen gegenüber den beiden anderen Varianten um 40 % höher aus. Bei Einsatz von Haftmischung werden sogar über doppelt so hohe Haftwerte gemessen.

Der durch den Einsatz blastexturierten Materials bedingte Festigkeitsabfall (ausgedrückt in Höchstzugkraft HZK) des unbeschichteten Zwirns hält sich in Grenzen, wenn nur ein Teil des Zwirns aus einem texturierten Faden besteht:

| PEK-Zwirn | 100 % glatt | HZK = 188,01 (N) |
|-----------|-------------|------------------|
| PEK-Zwirn | 75 % glatt | |
| | 25 % text | HZK = 165,06 (N). |

Die Bruchdehnungswerte werden nicht beeinflußt. Sie betragen in beiden Fällen ca. 24 %.

**Patentansprüche**

1. Verbundwerkstoff enthaltend als Matrix eine polymere organische Verbindung und als Verstärkungsmaterial Fäden oder Zwirne aus Polyetherketon oder aus diesen Fäden oder Zwirnen aufgebaute textile Flächengebilde, dadurch gekennzeichnet, daß Fäden oder Zwirne aus Polyetherketon, die eine Kräuselung aufweisen, enthalten sind.

2. Verbundwerkstoff gemäß Anspruch 1, dadurch gekennzeichnet, daß es sich bei dem polymeren organischen Matrixmaterial um Kautschuk handelt.

3. Verbundwerkstoff gemäß Anspruch 1, dadurch gekennzeichnet, daß es sich bei dem polymeren organischen Matrixmaterial um ein härtbares und/oder thermoplastisches Kunstharz handelt.

4. Verbundwerkstoff gemäß Anspruch 1, dadurch gekennzeichnet, daß das Verstärkungsmaterial stauchkammertexturierte Fäden enthält oder daß es sich um einen Zwirn enthaltend solche Fäden oder um ein Gewebe enthaltend solche Fäden oder Zwirne handelt.

5. Verbundwerkstoff gemäß Anspruch 1, dadurch gekennzeichnet, daß das Verstärkungsmaterial blastexturierte Fäden enthält, die Schlaufen aufweisen, oder daß es sich um einen Zwirn enthaltend solche Fäden oder um ein Gewebe enthaltend solche Garne oder Zwirne handelt.

6. Verbundwerkstoff gemäß Anspruch 5, dadurch gekennzeichnet, daß die Zahl der Schlaufen 3 bis 6 pro cm des Fadens beträgt.

7. Verbundwerkstoff gemäß Anspruch 1, dadurch gekennzeichnet, daß das Verstärkungsmaterial ein Zwirn aus texturierten und glatten Fäden ist, und der Anteil der texturierten Fäden bezogen auf das Gewicht des Verstärkungsmaterials kleiner als 50 Gew.% ist.

**8.** Verwendung von gekräuselten Fäden aus Polyetherketon zur Verstärkung von organischen polymeren Materialien, insbesondere zur Verstärkung von Kautschuk.

## Claims

**1.** A composite matrix comprising a polymeric organic compound and a reinforcing material comprising a polyether ketone single, folded or cabled yarn or a fabric formed from such single, folded or cabled yarn, characterized in that crimped polyether ketone single, folded or cabled yarn is comprised.

**2.** The composite of claim 1, characterized in that the polymeric organic matrix material is rubber.

**3.** The composite of claim 1, characterized in that the polymeric organic matrix material is a curable and/or thermoplastic synthetic resin.

**4.** The composite of claim 1, characterized in that the reinforcing material comprises stuffer box textured single yarn or is folded or cabled yarn comprising such single yarn or woven fabric comprising such single, folded or cabled yarn.

**5.** The composite of claim 1, characterized in that the reinforcing material comprises air jet textured single yarn with loops or is folded or cabled yarn comprising such single yarn or woven fabric comprising such single, folded or cabled yarn.

**6.** The composite of claim 5, characterized in that the number of loops is from 3 to 6 per cm of the yarn.

**7.** The composite of claim 1, characterized in that the reinforcing material is folded or cabled yarn comprising textured and flat single yarns and the proportion of textured single yarn based on the weight of the reinforcing material is less than 50% by weight.

**8.** The use of crimped polyether ketone yarn for reinforcing organic polymer materials, in particular for reinforcing rubber.

## Revendications

**1.** Matériau composite, dont la matrice est constituée par un composé organique polymère et le matériau de renfort est formé par des fibres ou fils retors en polyéthercétone ou par des nappes textiles réalisées en ces fibres ou fils retors, caractérisé en ce qu'il contient des fibres ou fils retors frisés en polyéthercétone.

**2.** Matériau composite selon la revendication 1, caractérisé en ce que le matériau organique polymère de la matrice est un caoutchouc.

**3.** Matériau composite selon la revendication 1, caractérisé en ce que le matériau organique polymère de la matrice est une résine synthétique durcissable et/ou thermoplastique.

**4.** Matériau composite selon la revendication 1, caractérisé en ce que le matériau de renfort contient des fils texturés par boîte frisante ou en ce que le matériau de renfort est un fil retors contenant des fils de ce type ou une nappe contenant des fils ou des fils retors de ce type.

**5.** Matériau composite selon la revendication 1, caractérisé en ce que le matériau de renfort contient des fils texturés par cloquage, présentant des boucles ou en ce que le matériau de renfort est un fil retors contenant des fils de ce type ou une nappe contenant des fils ou des fils retors de ce type.

**6.** Matériau composite selon la revendication 5, caractérisé en ce que le fil compte un nombre de boucles compris entre 3 et 6 par cm de fil.

7. Matériau composite selon la revendication 1, caractérisé en ce que le matériau de renfort est un fil retors formé de fils texturés et de fils lisses et la quantité de fils texturés représente moins de 50 % en poids par rapport au poids du matériau de renfort.

8. Utilisation de fils frisés en polyéthercétone pour renforcer les matériaux organiques polymères, en particulier pour renforcer le caoutchouc.